# EUROPEAN PATENT APPLICATION

(11) **EP 2 626 653 A2**
(43) Date of publication of application: **14.08.2013**
(21) Application number: 13152422.5
(22) Date of filing: 23.01.2013
(51) Int. Cl.: F25B 25/00

(54) **Secondary referigeration circuit including micro-encapsulated phase change material**

(30) Priority: 13.02.2012 US 201213371864
(71) Applicant: Hussmann Corporation, Bridgeton MO 63044-2483 (US)
(72) Inventor: Shapiro, Doron, St. Louis, MO Missouri 63044 (US)
(74) Representative: Roberts, Peter David

(57) **Abstract**

A refrigeration system (10) including a primary circuit (15) that has a compressor (25) circulating a first heat exchange fluid and a heat exchanger (40) located downstream of the compressor (25). The refrigeration system (10) also includes a secondary circuit (20) circulating a second heat exchange fluid that has micro-encapsulated phase change material in heat exchange relationship with the primary circuit via the heat exchanger (40). A refrigerated display case (40) defines a product display area and has an airflow in heat exchange relationship with the primary circuit or the secondary circuit.

## Description

### BACKGROUND

The present invention relates to refrigeration systems, and more particularly to refrigeration systems including a primary loop and a secondary loop.

In some configurations, a liquid recirculation refrigeration system includes a primary refrigeration circuit that circulates a first refrigerant to remove heat from (i.e., cool) a second refrigerant circulating through a secondary refrigeration circuit. In such a system, a heat exchanger of the primary circuit is provided to cool the second refrigerant, which can be pumped through heat exchangers in refrigerated display cases. The second refrigerant removes heat from air that circulates through a product display area of these merchandisers before circulating back through the heat exchanger of the primary circuit. However, existing refrigeration systems with primary and secondary refrigeration circuits typically require a relatively high amount of power to pump the second refrigerant through the secondary refrigeration circuit. Further, some of the power needed to pump the second refrigerant increases the heat content of the second refrigerant, making it more difficult to maintain food product at desired temperatures.

### SUMMARY

In one construction, the invention provides a refrigeration system including a primary circuit that has a compressor circulating a first heat exchange fluid and a heat exchanger located downstream of the compressor. The refrigeration system also includes a secondary circuit circulating a second heat exchange fluid that has micro-encapsulated phase change material in heat exchange relationship with the primary circuit via the heat exchanger. A refrigerated display case defines a product display area and has an airflow in heat exchange relationship with the primary circuit or the secondary circuit.

In another construction, the invention provides a refrigeration system including a primary circuit that has a heat exchanger, a first heat exchange fluid circulating through the primary circuit, and a secondary circuit in fluid communication with the heat exchanger. A second heat exchange fluid circulates through the secondary circuit and includes a plurality of different micro-encapsulated phase change materials. Each of the micro-encapsulated phase change materials changing phase at a different temperature.

In another construction, the invention provides a refrigeration system including a primary circuit with a first heat exchanger and circulating a first heat exchange fluid, and a plurality of refrigerated display cases, each of which defines a product display area and has a second heat exchanger. A secondary circuit is in fluid communication with the first heat exchanger and the second heat exchangers, and circulates a second heat exchange fluid between the first heat exchanger and the second heat exchangers. The second heat exchange fluid has a single phase coolant and a non-zero quantity of up to 50% by mass of a micro-encapsulated phase change material.

According to an aspect of the invention there is provided a refrigeration system comprising a primary circuit including a compressor circulating a first heat exchange fluid and a heat exchanger located downstream of the compressor; a secondary circuit circulating a second heat exchange fluid having micro-encapsulated phase change material in heat exchange relationship with the primary circuit via the heat exchanger; and a refrigerated display case defining a product display area and having an airflow in heat exchange relationship with the primary circuit or the secondary circuit.

The secondary circuit may include a pump and the second heat exchange fluid includes a single phase coolant.

The second heat exchange fluid may include a mixture of propylene glycol and water.

The second heat exchange fluid may include hydrofluoroether.

The secondary circuit may include an air-cooled heat exchanger and the refrigeration system includes a plurality of refrigerated display cases, and wherein each of the refrigerated display cases is in heat exchange relationship with the secondary circuit via a corresponding discrete heat exchanger.

The primary circuit may include the heat exchanger, a compressor, and a condenser fluidly connected and arranged in series with each other, and wherein the secondary circuit includes the pump, the heat exchanger, and the refrigerated display case fluidly connected and arranged in series with each other.

The second heat exchange fluid may include a non-zero quantity of up to 50% by mass of the micro-encapsulated phase change material.

The second heat exchange fluid may include between about 20% and about 30% by mass of the micro-encapsulated phase change material.

The micro-encapsulated phase change material may have a temperature phase change between -40° Fahrenheit and 300° Fahrenheit.

According to an aspect of the invention there is provided a refrigeration system comprising: a primary circuit including a heat exchanger; a first heat exchange fluid configured to circulate through the primary circuit; a secondary circuit in fluid communication with the heat exchanger; and a second heat exchange fluid configured to circulate through the secondary circuit and including a plurality of different micro-encapsulated phase change materials, each of the micro-encapsulated phase change materials changing phase at a different temperature.

The second heat exchange fluid may include a single phase coolant having one of a mixture of propylene glycol and water, and hydrofluoroether.

The secondary circuit may include an air-cooled heat exchanger and the refrigeration system includes a plurality of refrigerated display cases, and wherein each of the refrigerated display cases is in heat exchange relationship with the secondary circuit via a corresponding heat exchanger.

The primary circuit may include the heat exchanger, a compressor, and a condenser fluidly connected and arranged in series with each other, and wherein the secondary circuit includes the heat exchanger, a refrigerated display case, and a pump fluidly connected and arranged in series with each other.

The second heat exchange fluid may include a non-zero quantity of up to 50% by mass of the micro-encapsulated phase change materials.

The second heat exchange fluid may include between about 20% and 30% by mass of the micro-encapsulated phase change materials.

According to an aspect of the invention there is provided a refrigeration system comprising: a primary circuit circulating a first heat exchange fluid and including a first heat exchanger; a plurality of refrigerated display cases each defining a product display area and including a second heat exchanger; and a secondary circuit in fluid communication with the first heat exchanger and the second heat exchangers, the secondary circuit circulating a second heat exchange fluid between the first heat exchanger and the second heat exchangers and including a single phase coolant and a non-zero quantity of up to 50% by mass of a micro-encapsulated phase change material.

The second fluid may include a mixture of propylene glycol and water.

The second fluid may include hydrofluoroether.

The second fluid may include between about 20% and about 30% by mass of the micro-encapsulated phase change materials.

The second heat exchange fluid may include a plurality of micro-encapsulated phase change materials, and wherein each of the micro-encapsulated phase change materials changes phase at a different temperature.

Other aspects of the invention will become apparent by consideration of the detailed description and accompanying drawings.

### BRIEF DESCRIPTION OF THE DRAWINGS

Fig. 1 is a schematic view of a refrigeration system including a primary refrigeration circuit and a secondary refrigeration circuit embodying the present invention.
Fig. 2 is a schematic view of another refrigeration system including a secondary refrigeration circuit embodying the present invention.

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

### DETAILED DESCRIPTION

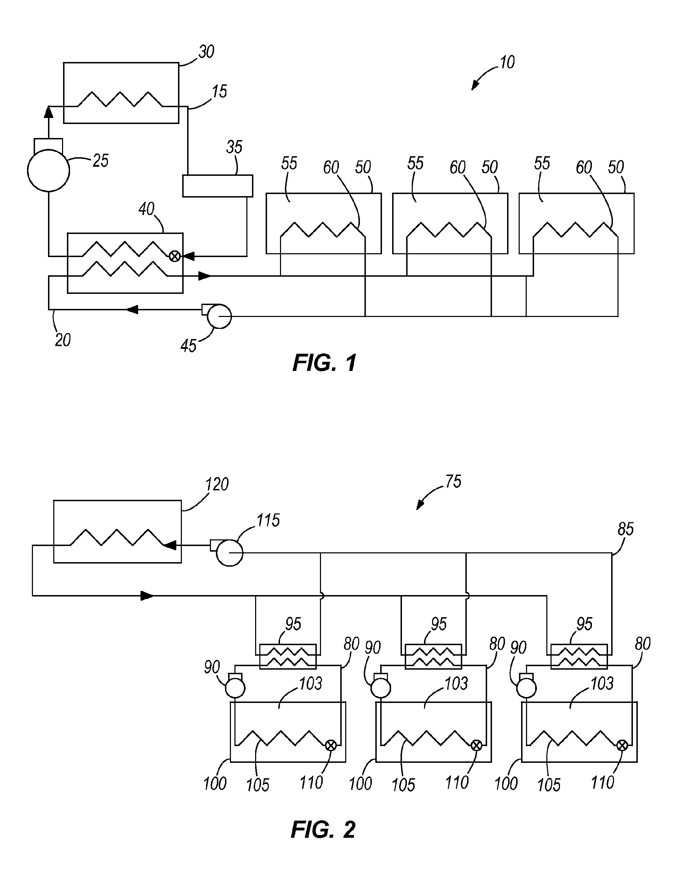

Figs. 1 illustrates an exemplary refrigeration system 10 including a primary refrigeration circuit 15 and a secondary refrigeration circuit 20. Generally, the illustrated refrigeration system 10 is used in a commercial setting (e.g., a grocery or retail store) to keep food product at a suitable temperature, although the refrigeration system 10 can be adapted for use in other applications (e.g., refrigerators, air-conditioning systems, oil refineries, chemical plants, metal refineries, etc.), where refrigeration is desired or required.

The illustrated primary circuit 15 is a high-side circuit that includes a compressor system 25, a condenser 30, a receiver 35, and a heat exchanger 40 fluidly connected and arranged in series relationship with each other. Although not shown, the primary circuit 15 also can include other components, as is known in the art. The compressor system 25 includes one or more compressors that circulate a first heat exchange fluid (e.g., refrigerant or coolant fluid) through the other components of the primary circuit 15. The first heat exchange fluid may be, for example, refrigerant 404A.

As illustrated, the secondary circuit 20 is a low-side circuit and is associated with the primary circuit 15 via the heat exchanger 40 such that the first heat exchange fluid in the primary circuit 15 removes heat from a second heat exchange fluid (e.g., refrigerant or coolant fluid) in the secondary circuit 20. The secondary circuit 20 includes a pump 45 and a plurality of refrigerated display cases 50. Each display case 50 defines a product display area 55 and includes a heat exchanger 60 that conditions the product display area 55 via heat exchange with air circulating through the case 50. As illustrated, the heat exchanger 60 of each display case 50 is connected to the secondary circuit 20 in parallel with the heat exchangers 60 of the remaining display cases 50.

The pump 45 circulates the second heat exchange fluid between the heat exchanger 40 and the heat exchangers 60 to condition the associated product display areas 55. The second heat exchange fluid includes a single phase coolant such as propylene glycol and water, although other coolants or refrigerants (e.g., hydrofluoroether) can be used in place of propylene glycol and water. The second heat exchange fluid also includes a micro-encapsulated phase change material ("MEPCM"). In some constructions, the second heat exchange fluid can include two or more MEPCMs that have the same or different freezing temperatures. Preferably, the second heat exchange fluid includes up to 50% by mass of one or more MEPCMs. For example, the second heat exchange fluid can include between about 20% and 30% (e.g., approximately 25%) by mass of MEPCM(s), although any quantity of MEPCM between about zero and about 50% by mass are considered herein.

Generally, the MEPCM is defined by very small (e.g., 8-500 microns in size) multi-component particles that have a core phase change material and an outer shell or wall. The phase change material can include a paraffin-wax or a fatty acid ester (or other natural fats and oils) that absorbs and releases heat in order to maintain a particular temperature. The outer wall of the MEPCM is an inert, very stable polymer (e.g., gelatin, melamine, acrylics, polyurethane, polyvinyl alcohol, etc.) that contains the phase change material so that the MEPCM particles remain solid regardless of whether the phase change material itself is in a solid or liquid state.

The MEPCM has a high latent heat capacity that works with the single phase coolant to reduce the flow rate needed in the secondary circuit 20 to adequately condition the product display areas 55. Stated another way, a relatively large amount of heat energy is absorbed or released when the MEPCM changes phase, which in turn provides a relatively high heat capacity for the second heat exchange fluid. For example, the second heat exchange fluid can include a MEPCM that changes phase (e.g., between liquid and solid phases) at 20° Fahrenheit. More generally, the second heat exchange fluid can include one or more MEPCMs with a phase change temperature ranging from -40° Fahrenheit to approximately 300° Fahrenheit. By providing the second heat exchange fluid with multiple MEPCMs having different phase change temperatures, the operating temperature range of the second heat exchange fluid can be expanded or widened as compared to the operating temperature range of conventional coolant fluids.

Fig. 2 illustrates another refrigeration system 75 that includes a plurality of primary refrigeration circuits 80 and a secondary refrigeration or heat rejection circuit 85 that can be used in a commercial setting (e.g., a grocery or retail store or other suitable application) to keep food product at a suitable temperature. As will be appreciated, the primary circuit 80 is a low-side refrigeration circuit and the secondary circuit 85 is a high-side circuit, which may reject heat to an ambient environment or another cooling medium.

Each primary circuit 80 illustrated in Fig. 2 includes a compressor system 90, a heat exchanger 95, and a plurality of refrigerated display cases 100. The compressor system 90 includes one or more compressors that circulate a first heat exchange fluid (e.g., refrigerant or coolant fluid) through the other components of the primary circuit 80. The first heat exchange fluid may be, for example, refrigerant 404A. The heat exchangers 95 are fluidly connected and arranged in series relationship with the components of the associated primary circuit 80. Each display case 100 defines a product display area 103 and includes a heat exchanger 105 and an expansion valve 110 located adjacent an inlet to the heat exchanger 105. Display cases are generally known and will not be discussed in detail. Although not shown, the primary circuit 80 also can include other components, as is known in the art.

As illustrated, the secondary circuit 85 is associated with the primary circuit 15 via the heat exchangers 95 such that the first heat exchange fluid in the primary circuits 80 exchanges heat with a second heat exchange fluid (e.g., refrigerant or coolant fluid) circulating through the secondary circuit 85. As illustrated, the secondary circuit 85 removes heat from the first heat exchange fluid circulating through the primary circuits 80. The secondary circuit 20 includes a pump 115 and an air-cooled heat exchanger 120, although the heat exchanger 120 can be cooled by another medium (e.g., refrigerant, etc.). The pump 115 circulates the second heat exchange fluid between the heat exchangers 95 and the heat exchanger 120. The second heat exchange fluid is the same as the fluid described with regard to the refrigeration system 10. In particular, the second heat exchange fluid includes a single phase coolant (e.g., a mixture of propylene glycol and water) and a micro-encapsulated phase change material ("MEPCM"). In some constructions, the second heat exchange fluid can include a two or more MEPCMs that have the same or different freezing temperatures.

With regard to the refrigeration system 10, the second heat exchange fluid in the secondary circuit 20 is chilled by heat exchange with the first heat exchange fluid within the heat exchanger 40, and the second heat exchange fluid is then pumped through the heat exchangers 60 in the refrigerated display cases 50. The chilled second heat exchange fluid extracts heat from the surrounding environment, reducing the temperature in the product display area 55 to a suitable level for food storage. As such, the second heat exchange fluid warms in the display cases 50 and is directed back toward the heat exchanger 40 at a higher temperature (e.g., 22° Fahrenheit) than when the fluid exited the heat exchanger 40 (e.g., 15° Fahrenheit).

With regard to the refrigeration system 75, the first heat exchange fluid is cooled by heat exchange with the second heat exchange fluid flowing through the heat exchangers 95. The first heat exchange fluid for each primary circuit 80 is then cycled through the heat exchangers 105 in the refrigerated display cases 100 to condition the associated product display areas 103. The warmed second heat exchange fluid is pumped from the heat exchangers 95 to the heat exchanger 120, where the second heat exchange fluid is cooled by heat transfer between the fluid and the medium (e.g., air) flowing through the heat exchanger 120.

The relatively high latent heat capacity of the second heat exchange fluid due to the inclusion of one or more MEPCMs reduces the flow rate of the second fluid within the secondary circuit 20 without loss of heat exchange capability. The combination of MEPCM and single phase coolant in the second heat exchange fluid also minimizes the power required to pump the second heat exchange fluid through the secondary circuit 20. The refrigeration systems 10, 75 described above reduce construction costs by reducing the size of the components needed.

Various features and advantages of the invention are set forth in the following claims.

## Claims

1. A refrigeration system comprising:
a primary circuit including a compressor circulating a first heat exchange fluid and a heat exchanger located downstream of the compressor;
a secondary circuit circulating a second heat exchange fluid having micro-encapsulated phase change material in heat exchange relationship with the primary circuit via the heat exchanger; and
a refrigerated display case defining a product display area and having an airflow in heat exchange relationship with the primary circuit or the secondary circuit.

2. The refrigeration system of claim 1, wherein the secondary circuit includes a pump and the second heat exchange fluid includes a single phase coolant.

3. The refrigeration system of claim 2, wherein the second heat exchange fluid includes a mixture of propylene glycol and water; or wherein the second heat exchange fluid includes hydrofluoroether.

4. The refrigeration system of claim 2, wherein the secondary circuit includes an air-cooled heat exchanger and the refrigeration system includes a plurality of refrigerated display cases, and wherein each of the refrigerated display cases is in heat exchange relationship with the secondary circuit via a corresponding discrete heat exchanger.

5. The refrigeration system of claim 2, wherein the primary circuit includes the heat exchanger, a compressor, and a condenser fluidly connected and arranged in series with each other, and wherein the secondary circuit includes the pump, the heat exchanger, and the refrigerated display case fluidly connected and arranged in series with each other.

6. The refrigeration system of claim 1, wherein the second heat exchange fluid includes a non-zero quantity of up to 50% by mass of the micro-encapsulated phase change material; wherein optionally the second heat exchange fluid includes between about 20% and about 30% by mass of the micro-encapsulated phase change material.

7. The refrigeration system of claim 1, wherein the micro-encapsulated phase change material has a temperature phase change between -40° Fahrenheit and 300° Fahrenheit.

8. A refrigeration system comprising:
a primary circuit including a heat exchanger;
a first heat exchange fluid configured to circulate through the primary circuit;
a secondary circuit in fluid communication with the heat exchanger; and
a second heat exchange fluid configured to circulate through the secondary circuit and including a plurality of different micro-encapsulated phase change materials, each of the micro-encapsulated phase change materials changing phase at a different temperature.

9. The refrigeration system of claim 8, wherein the second heat exchange fluid includes a single phase coolant having one of a mixture of propylene glycol and water, and hydrofluoroether.

10. The refrigeration system of claim 8, wherein the secondary circuit includes an air-cooled heat exchanger and the refrigeration system includes a plurality of refrigerated display cases, and wherein each of the refrigerated display cases is in heat exchange relationship with the secondary circuit via a corresponding heat exchanger.

11. The refrigeration system of claim 8, wherein the primary circuit includes the heat exchanger, a compressor, and a condenser fluidly connected and arranged in series with each other, and wherein the secondary circuit includes the heat exchanger, a refrigerated display case, and a pump fluidly connected and arranged in series with each other.

12. The refrigeration system of claim 8, wherein the second heat exchange fluid includes a non-zero quantity of up to 50% by mass of the micro-encapsulated phase change materials; wherein optionally the second heat exchange fluid includes between about 20% and 30% by mass of the micro-encapsulated phase change materials.

13. A refrigeration system comprising:
a primary circuit circulating a first heat exchange fluid and including a first heat exchanger;
a plurality of refrigerated display cases each defining a product display area and including a second heat exchanger; and
a secondary circuit in fluid communication with the first heat exchanger and the second heat exchangers, the secondary circuit circulating a second heat exchange fluid between the first heat exchanger and the second heat exchangers and including a single phase coolant and a non-zero quantity of up to 50% by mass of a micro-encapsulated phase change material.

14. The refrigeration system of claim 13, wherein the second fluid includes a mixture of propylene glycol and water; or wherein the second fluid includes hydrofluoroether; or wherein the second fluid includes between about 20% and about 30% by mass of the micro-encapsulated phase change materials.

15. The refrigeration system of claim 13, wherein the second heat exchange fluid includes a plurality of micro-encapsulated phase change materials, and wherein each of the micro-encapsulated phase change materials changes phase at a different temperature.
